# EUROPÄISCHE PATENTSCHRIFT

(11) **EP 0 394 272 B1**
(45) Veröffentlichungstag und Bekanntmachung des Hinweises auf die Patenterteilung: **14.04.1993**
(21) Anmeldenummer: 88907249.2
(22) Anmeldetag: 30.08.1988
(51) Int. Cl.: H01C 1/034, G01N 27/417, H01C 1/024

(54) **PTC-TEMPERATURFÜHLER SOWIE VERFAHREN ZUR HERSTELLUNG VON PTC-TEMPERATURFÜHLERELEMENTEN FÜR DEN PTC-TEMPERATURFÜHLER**
PTC TEMPERATURE SENSORS, PROCESS FOR PRODUCING PTC TEMPERATURE-SENSING ELEMENTS FOR PTC TEMPERATURE SENSORS
CAPTEUR DE TEMPERATURE A COEFFICIENT POSITION DE TEMPERATURE (PTC) ET PROCEDE DE FABRICATION D'ELEMENTS DE DETECTION DE TEMPERATURE PTC POUR CE CAPTEUR

(30) Priorität: 01.10.1987 DE 3733192
(43) Veröffentlichungstag der Anmeldung: 31.10.1990
(73) Patentinhaber: ROBERT BOSCH GMBH, 70442 Stuttgart (DE)
(72) Erfinder: FRIESE, Karl-Hermann, D-7250 Leonberg (DE); STECHER, Günther, D-7140 Ludwigsburg (DE); WIEDENMANN, Hans-Martin, D-7000 Stuttgart 10 (DE)
(86) Internationale Anmeldenummer: DE8800527
(87) Internationale Veröffentlichungsnummer: WO8903033

(56) Entgegenhaltungen:
- EP-A- 0 017 359
- EP-A- 0 115 148
- EP-A- 0 142 993
- EP-A- 0 188 900
- Patent Abstracts of Japan, Vol. 10, No. 237, (P-513)(2383), 7 November 1986 & JP-A-61134655
- Patent Abstrcts of Japan, Vol. 10, No. 294, (P-504)(2350) 7 October 1986 & JP-A-61112958
- Patent Abstracts of Japan, Vol. 10, No. 149 (P-461)(2206), 30 May 1986; & JP-A-613050

## Beschreibung

### Stand der Technik

Die Erfindung betrifft einen PTC-Temperaturfühler nach der Gattung des Hauptanspruchs sowie Verfahren zur Herstellung von PTC-Temperaturfühlerelementen für den PTC-Temperaturfühler.

Es ist allgemein bekannt, zur Messung von vergleichsweise hohen Temperaturen, wie sie beispielsweise in Abgasen von Verbrennungsmotoren vorherrschen, Temperaturfühler mit Temperaturfühlerelementen mit temperaturbeständigen Widerstandsmaterialien mit temperaturabhängigem Widerstandswert zu verwenden (vgl. E.D. Macklen, "Thermistors", Verlag Electrochemical Publications, Ltd., 1979).

PTC-Temperaturfühler nutzen die stetige Widerstandsänderung von Metallen oder Halbleitern mit positivem Temperaturkoeffizienten bei sich ändernden Temperaturen. Die in PTC-Temperaturfühlern bevorzugt verwendeten Metalle sind aufgrund ihrer hohen Stabilität und Reproduzierbarkeit Platin und Nickel.

Es ist ferner bekannt, z. B. aus den EP-A 0 188 900 und 0 142 993 sowie den DE-OS 30 17 947 und 35 43 759, zur Bestimmung des λ-Wertes von Gasgemischen planare Abgassensoren zu verwenden, die sich in besonders kostengünstiger Weise in Keramikfolien- und Siebdrucktechnik herstellen lassen.

Nachteilig an den PTC-Temperaturfühlern, die zum Beispiel aus der vorstehend genannten Publikation "Thermistors" von E. D. Macklen bekannt sind, ist, daß sie bei Gebrauch zu rasch altern, daß ihre Ansprechzeiten zu lang, ihre Herstellungsweise zu aufwendig und/oder ihre Abmessungen zu groß sind. Besonders die unvermeidliche Diffusion von Komponenten des Meßgases, wie zum Beispiel Wasserstoff durch hochtemperaturfeste Metallgehäuse oder durch Glasumhüllungen verursacht unerwünschte Veränderungen der Widerstandswerte. Metallische PTC-Widerstände sind bei hohen Temperaturen besonders durch Oxidation gefährdet.

Die EP-A1 017 359 beschreibt einen Temperatursensor mit hoher thermischer und mechanischer Beständigkeit, der unter anderem auch in Planartechnik aufgebaut werden kann: dazu werden auf einen Träger nacheinander durch Flammspritzen folgende Schichten aufgebracht: zunächst eine isolierende Schicht, anschließend elektrische Zuleitungen, das Sensorelement aus einem NTC-Material und schließlich ein isolierender Film als Schutzschicht gegen Korrosion. Ein Temperaturfühler mit einheitlich aus demselben PTC-Material aufgebautem Widerstand und Leiterbahnen als Laminatverbund von Schichten, die anschließend zusammengesintert sind, ist daraus nicht bekannt.

### Vorteile der Erfindung

Der erfindungsgemäße PTC-Temperaturfühler mit dem hermetisch gegenüber dem Meßgas und der Umgebungsluft gekapselten PTC-Temperaturfühlerelement mit den kennzeichnenden Merkmalen des Hauptanspruchs hat gegenüber bekannten PTC-Temperaturfühlern den Vorteil, daß er bei kostengünstiger Herstellungsweise keiner Alterung durch Einfluß wechselnder O₂-Partialdrücke unterliegt, eine hohe Alterungsbeständigkeit der Widerstandscharakteristik in fetten und mageren Gasgemischen, zum Beispiel in Kfz-Abgasen bei 300 - 1000° C aufweist und einen fremdpotentialfreien Aufbau hat, aufgrund seiner geringen Wärmekapazität durch kurze Ansprechzeiten gekennzeichnet ist und sich infolge geringer Abmessungen zum Einbau in sehr enge Gehäuse eignet.

Das für einen erfindungsgemäßen PTC-Temperaturfühler benötigte Temperaturfühlerelement läßt sich in bekannter Laminiertechnik aus vergleichsweise dünnen Keramikfolien einer Stärke von insbesondere 0,1 bis 0,6 mm, vorzugsweise von 0,25 bis 0,3 mm, die zuvor in bekannten Dickschichttechniken mit Leiterbahnen und gegebenenfalls mit temperaturstabilen PTC-Widerständen beschichtet wurden, herstellen. Die Keramikfolien können dabei aus Isolierkeramik, wie zum Beispiel Al₂O₃, gegebenenfalls mit Flußmittelzusatz, oder aus anderer temperaturfester Keramik, zum Beispiel auf ZrO₂-Basis bestehen. Im letzteren Fall müssen der PTC-Widerstand und die dazu gehörigen Leiterbahnen von Isolationsschichten umgeben sein.

In Abhängigkeit von der Wahl der Zur Herstellung eines PTC-Temperaturfühlerelementes für einen erfindungsgemäßen PTC-Temperaturfühler verwendeten Folien lassen sich daher verschiedene Typen von PTC-Temperaturfühlern herstellen. Bevorzugte PTC-Temperaturfühler, die im folgenden näher beschrieben werden sollen, lassen sich grob unterteilen in solche mit Temperaturfühlerelementen aus:
(A) Keramikfolien auf Isolatorkeramik-Basis, insbesondere auf Al₂O₃-Basis und
(B) Keramikfolien auf Festelektrolyt-Basis,
wobei gegebenenfalls auch eine Kombination beider Folientypen möglich ist.

### (A) Temperaturfühlerelemente aus Keramikfolien auf Isolatorkeramik-Basis

Temperaturfühlerelemente dieses Typs zeichnen sich dadurch aus, daß auf die Anbringung von Isolationen zwischen Folie einerseits und PTC-Widerstand und Leiterbahnen, im folgenden kurz als Widerstandsbahn bezeichnet, andererseits sowie in den Durchkontaktierungslöchern verzichtet werden kann. Besonders vorteilhafte Keramikfolien auf Isolatorkeramik-Basis sind solche auf Al₂O₃-Basis, deren Verwendung zur Herstellung erfindungsgemäßer Temperaturfühler im folgenden beispielsweise beschrieben wird.

Zur Erzeugung der Widerstandsbahnen können in bekannten Auftragstechniken auftragbare Suspensionen und Pasten auf Metall- bzw. Cermetbasis verwendet werden, vorzugsweise Suspensionen und Pasten, die als Metallkomponente Platinpartikel oder solche von anderen Pt-Metallen enthalten.

In einfachster Weise läßt sich ein PTC-Temperaturfühlerelement aus Keramikfolien auf Al₂O₃-Basis nach der Erfindung somit z. B. dadurch herstellen, daß man aus einer ersten Folie Durchkontaktierungslöcher ausstanzt, Durchkontaktierungen erzeugt, die Folie mit einer Widerstandsbahn bedruckt und auf diese Folie, vorzugsweise nach Aufdrucken einer interlaminaren Binderschicht auf Al₂O₃-Basis, eine weitere Keramikfolie auf Al₂O₃-Basis auflaminiert und sintert.

Die Sinterung erfolgt in vorteilhafter Weise durch etwa 3-stündiges Erhitzen auf eine Temperatur bis 1600 °C. Bei Zusatz geeigneter Flußmittel, vorzugsweise auf Silikatbasis, z. B. Erdalkalioxidsilikat-Basis in ausreichender Menge, läßt sich die maximal anzuwendende Sintertemperatur auch absenken. Dies gilt in ähnlicher Weise für den Einsatz hochsinteraktiver Al₂O₃-Rohstoffe.

Die elektrischen Kontaktflächen lassen sich in vorteilhafter Weise vor, jedoch auch nach Durchführung des Sinterprozesses aufdrucken.

### (B) Temperaturfühlerelemente für Keramikfolien auf Festelektrolyt-Basis

Zur Herstellung von Temperaturfühlerelementen dieses Typs geeignete Folien sind bekannt. In typischer Weise können derartige Folien zu etwa 50 bis 97 Mol-% aus ZrO₂, CeO₂, HfO₂ oder ThO₂ und 50 bis 3 Mol-% aus CaO, MgO oder SrO und/oder Yb₂O₃, Sc₂O₃ oder anderen Oxiden der seltenden Erden und/oder insbesondere Y₂O₃ bestehen. In besonders vorteilhafter Weise lassen sich Folien aus mit Yttrium stabilisiertem ZrO₂, sog. YSZ-Folien verwenden, die in der Regel etwa 4 - 8 Mol-% Y₂O₃ enthalten.

Da Festelektrolyte des angegebenen Typs leicht einer elektrolytischen Zersetzung infolge einer zu hohen Strombelastung unterliegen, ist es bei Verwendung von Folien dieses Typs bekannt, zwischen Widerstandsbahnen und Folienüberfläche eine Isolationsschicht anzuordnen, die beispielsweise aus einer keramischen Al₂O₃-Schicht bestehen kann. Aus der GB-PS 1 048 069 und der EP-A 0 115 148 ist es ferner bekannt, den elektrischen Widerstand keramischer Materialien auf Basis von ZrO₂, HfO₂, CeO₂ bzw. ThO₂ durch Einbau von fünfwertigen Metallionen, wie z. B. Nb⁵⁺ - und Ta⁵⁺ -Ionen in das Wirtsgitter zu erhöhen.

Gemäß einer vorteilhaften Ausgestaltung eines Temperaturfühlerelementes nach der Erfindung kann somit eine isolierende Zwischenschicht, z. B. zwischen Widerstandsbahn und Festelektrolytsubstrat auch durch Einbau von fünfwertigen Metallionen, wie z. B. Nb⁵⁺- und Ta⁵⁺-Ionen in das Festelektrolytsubstrat erzeugt werden. Die Ausbildung einer solchen isolierenden Zwischenschicht läßt sich dadurch erreichen, daß man der zur Ausbildung der Widerstandsbahn verwendeten Suspension oder Paste eine oder mehrere Verbindungen, insbesondere Oxide mit einem 5- oder höherwertigen Kation,z. B. Nb₂O₅, zusetzt, das man bei dem sich an den Laminierungsprozeß anschließenden Sinterprozeß bei Temperaturen bis zu 1600 °C, vorzugsweise 1350 bis 1500 °C in das Festelektrolytsubstrat eindiffundieren läßt. In entsprechender Weise können auch in den Durchkontaktierungslöchern derartige isolierende Zwischenschichten erzeugt werden.

Zur Herstellung der Widerstandsbahnen können auf die isolierenden Schichten in üblicher Dickschichttechnik übliche Widerstandsbahnen erzeugende Massen aufgetragen werden. Gemäß einer vorteilhaften Ausgestaltung werden Pasten auf Platin-Basis oder auf Basis anderer Pt-Metalle oder auf Platin-Cermetbasis verwendet. Diese Pasten können in bekannter Weise unter Verwendung von organischen Bindemitteln und/oder Haftverbesserern, Weichmachern und organischen Lösungsmitteln hergestellt werden.

Sollen gleichzeitig isolierende Zwischenschichten erzeugt werden, so können den Pasten geringere Mengen von Verbindungen mit einem 5-wertigen oder höherwertigen Kation zugesetzt werden, z. B. Nb₂O₅. Als haftverbessernde Zusätze eignen sich z. B. Al₂O₃, ZrO₂ und Silikate.

Durchkontaktierungslöcher können durch einfaches Ausstanzen erzeugt werden, Die Isolierung der Durchkontaktierungslöcher kann z. B. mittels einer isolierenden Al₂O₃-Schicht oder durch Verwendung einer Paste des beschriebenen Typs mit einem 5- oder höherwertigen Kation erfolgen.

In vorteilhafter Weise wird der Laminatverbund aus zwei Keramikfolien, nämlich einer Basisfolie mit einer in Dickschichttechnik aufgedruckten Widerstandsbahn und einer zweiten Folie, die die Widerstandsbahn hermetisch abdeckt, sowie gegebenenfalls isolierenden Schichten und einem hermetisch abdichtenden Rahmen gebildet. Gegebenenfalls können weitere Schichten am Aufbau des Laminatverbundes beteiligt sein, z. B. haftverbessernde Schichten.

Zum Zusammenlaminieren der Folien und zur Ausbildung des hermetisch abdichtenden Rahmens lassen sich interlaminare Binder, z. B. auf YSZ-Basis verwenden.

Der Laminatverbund wird anschließend gesintert, z. B. durch 1- bis 10-stündiges Erhitzen auf Temperaturen von 1350 bis 1500 °C. Nach, gegebenenfalls jedoch auch bereits vor, Durchführung des Sinterprozesses können im Bereich der Durchkontaktierungslöcher elektrische Kontaktflächen aufgedruckt werden.

Bei Verwendung von PTC-Widerstandsbahnen auf Nickel-Basis oder auf Nickel-Legierungs-Basis ist Sorge dafür zu tragen, daß die Sintertemperatur beim Zusammensintern der Folien bei unter 1400 °C, vorzugsweise unter 1300 °C liegt. Dies läßt sich dadurch erreichen, daß Folien mit einem vergleichsweise hohen Flußmittel- bzw. Glasgehalt verwendet werden. So können beispielsweise bekannte Al₂O₃-Folien verwendet werden, die bereits bei Temperaturen von 900 °C gesintert werden können. Bei Verwendung von PTC-Widerstandsbahnen auf Nickel-Basis oder auf Nickel-Legierungs-Basis ist ferner eine Sinterung in inerter, vorzugsweise reduzierender Atmosphäre, z. B. einer Atmosphäre aus 90 % N₂ und 10 % H₂ erforderlich.

Zur Herstellung erfindungsgemäßer PTC-Temperaturfühler werden die beschriebenen Temperaturfühlerelemente in Gehäuse bekannter Bauart und Konstruktionen eingesetzt, z. B. in solche des aus der DE-OS 32 06 903 bekannten Typs.

### Zeichnung

Die Figuren dienen der näheren Erläuterung der Erfindung. Im einzelnen sind schematisch dargestellt in:
- Fig. 1: die einzelnen Verfahrensschritte zur Herstellung einer vorteilhaften Ausführungsform eines PTC-Temperaturfühlerelementes mit Folien auf Isolatorkeramik-Basis für einen erfindungsgemäßen PTC-Temperaturfühler und in
- Fig. 2: die einzelnen Verfahrensschritte zur Herstellung einer zweiten vorteilhaften Ausführungsform eines PTC-Temperaturfühlerelementes mit Festelektrolytfolien für einen erfindungsgemäßen PTC-Temperaturfühler.

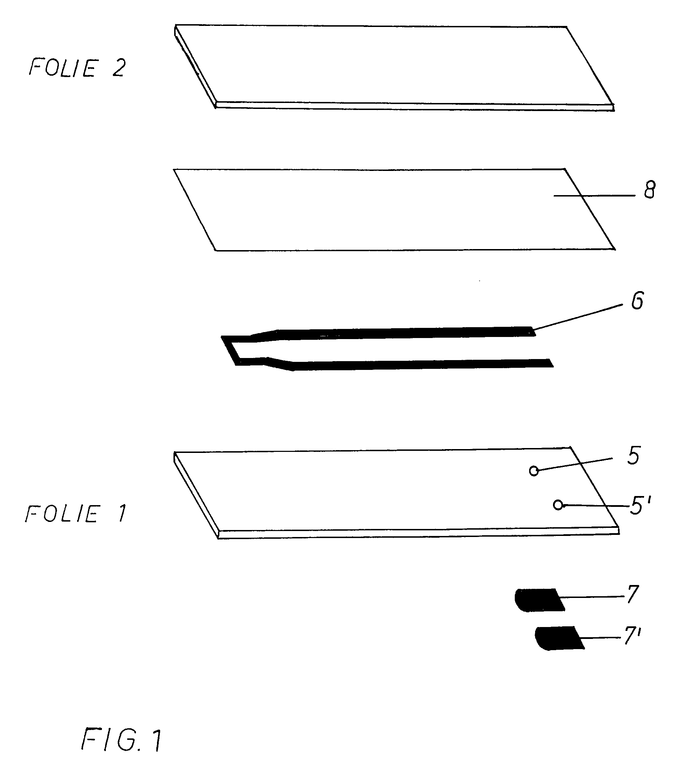

Gemäß Fig. 1 verfährt man bei der Herstellung einer ersten vorteilhaften Ausgestaltung eines PTC-Temperaturfühlerelementes für einen erfindungsgemäßen PTC-Temperaturfühler in der Weise, daß man
1. aus einer Folie 1 auf Isolatorkeramik-Basis Durchkontaktierungslöcher 5, 5' ausstanzt und Durchkontakttierungen erzeugt,
2. auf diese Folie 1 eine PTC-Widerstandsbahn 6 und auf ihre Rückseite Kontaktflächen 7, 7' aufdruckt,
3. auf die Folie 2 auf Isolatorkeramik-Basis eine interlaminare Binderschicht 8 aufdruckt und
4. die beiden Folien unter Anwendung von Druck und erhöhter Temperatur zusammenlaminiert, ggf. die im Mehrfachnutzen hergestellten PTC-Temperaturfühlerelemente aus dem Laminat herausschneidet und diese dann einem Sinterprozeß unterwirft.

Gemäß einer besonders vorteilhaften Ausgestaltung der Erfindung verwendet man als Folien auf Isolatorkeramik-Basis solche auf Al₂O₃-Basis. Als zweckmäßig hat es sich erwiesen, Folien einer Schichtstärke von 0,1 bis 0,6 mm, vorzugsweise 0,25 bis 0,3 mm zu verwenden.

Gegebenenfalls können ferner Folien auf Al₂O₃-Basis mit einem Flußmittelzuschlag auf Silikat-Basis,z. B. Erdalkalioxidsilikat-Basis oder mit Zusatz von metastabilen tetragonalen ZrO₂-Partikeln geringer Korngröße zu Al₂O₃, wobei eine sehr homogene Verteilung der ZrO₂-Einlagerungen zu einer erhöhten Festigkeit und einer verbesserten Temperaturschockbeständigkeit führen soll, verwendet werden. Diese Keramik ist auch als dispersionsverfestigte Al₂O₃-Keramik bekannt geworden.

Zur Erzeugung der PTC-Widerstandsbahn lassen sich übliche PTC-Widerstandspasten verwenden, in vorteilhafter Weise Pt/Al₂O₃-Cermet-Pasten, z. B. mit Pt oder einer Pt-Legierung und zum Rest Al₂O₃. In vorteilhafter Weise läßt sich zur Herstellung der Widerstandsbahn, der Durchkontaktierungen und der Kontaktflächen eine Pt/Al₂O₃-Cermet-Paste verwenden.

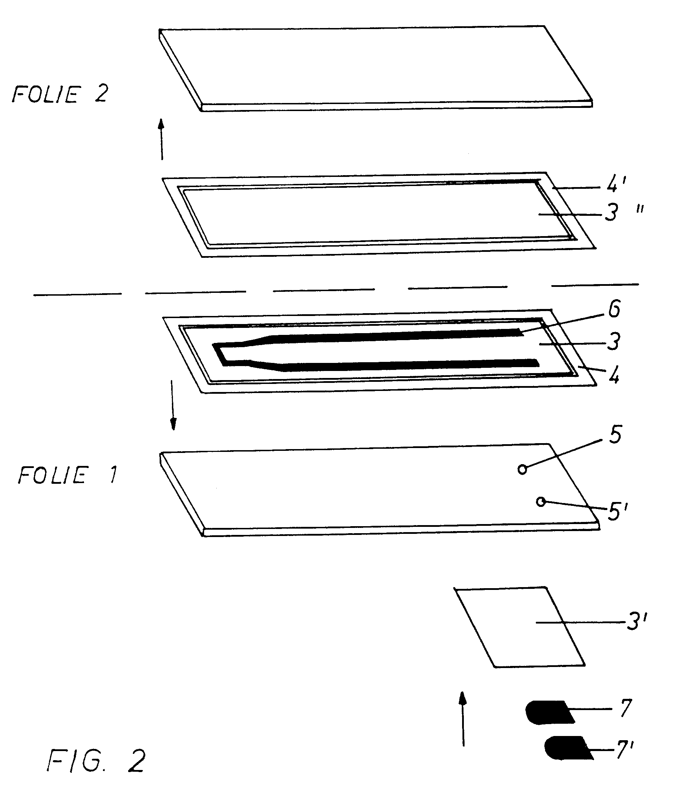

Gemäß Fig. 2 verfährt man bei der Herstellung einer zweiten vorteilhaften Ausgestaltung eines PTC-Temperaturfühlerelementes aus Folien auf Festelektrolyt-Basis in der Weise, daß man
1. auf eine Keramikfolie 1 auf Festelektrolytbasis eine Isolationsschicht 3 und einen hermetisch abdichtenden Rahmen 4 sowie auf ihre Rückseite (im Bereich der später aufzudruckenden Kontakte) eine Isolationsschicht 3' aufdruckt,
2. Durchkontaktierungslöcher 5, 5' ausstanzt und Durchkontaktierungen erzeugt,
3. auf die Isolationsschicht 3 eine PTC-Widerstandsbahn 6 aufdruckt,
4. die Rückseite der Folie mit Kontaktflächen 7, 7' versieht, und
5. auf die Frontseite der Folie 1 eine zweite Keramikfolie 2 auf Festelektrolytbasis, auf die zuvor eine Isolationsschicht 3'' und ein hermetisch abdichtender Rahmen 4' aufgedruckt worden waren, aufbringt und die Folien zusammenlaminiert, ggf. die in Mehrfachnutzen hergestellten PTC-Temperaturfühlerelemente aus dem Laminat herausschneidet und diese dann einem Sinterprozeß unterwirft.

Diese Verfahrensweise läßt sich in verschiedener Weise modifizieren. So ist es z. B. möglich, in den ausgestanzten Durchkontaktierungslöchern 5, 5' eine Isolierschicht und einen elektrischen Leiter in einem Arbeitsgang zu erzeugen, indem man in den Durchkontaktierungslöchern eine Paste aus einem Leiter, z. B. Platin, und einer Verbindung mit einem 5- oder höherwertigen Kation, z. B. Nb₂O₅, abscheidet. Auch kann z. B. auf die Frontseite der Keramikfolie 1 mit der aufgedruckten Widerstandsbahn eine Keramikfolie 2 ohne Isolationsschicht 3''und ohne abdichtenden Rahmen 4' auflaminiert werden, wenn diese Schicht und dieser Rahmen zuvor auf die Folie 1 aufgedruckt worden sind.

In vorteilhafter Weise verwendet man als Festelektrolyt-Keramikfolien solche auf YSZ-Basis, zweckmäßig einer Stärke von 0,1 - 0,6 mm. Die Isolationsschichten bestehen in vorteilhafter Weise aus Al₂O₃-Schichten. Zur Erzeugung der PTC-Widerstandsbahn 6 und der Kontaktflächen 7, 7' läßt sich in vorteilhafter Weise eine Paste aus Platin- und Al₂O₃-Teilchen verwenden. Zur Ausbildung des hermetisch abdichtenden Rahmens eignet sich vorzugsweise ein interlaminarer Binder, z. B. auf YSZ-Basis.

Bei der Herstellung einer weiteren vorteilhaften Ausgestaltung eines PTC-Temperaturfühlerelementes aus Folien auf Festelektrolyt-Basis verfährt man, wie in Fig. 1 schematisch dargestellt, wobei man jedoch diesmal
1. in eine Keramikfolie 1 auf Festelektrolytbasis Durchkontaktierungslöcher 5, 5' stanzt,
2. in den Durchkontaktierungslöchern einen elektrischen Leiter abscheidet, der eine Verbindung mit einem 5- oder höherwertigen Kation zur Erzeugung elektrisch isolierender Bereiche während des Sinterprozesses enthält,
3. auf der Frontseite der Folie 1 in Siebdrucktechnik die Widerstandsbahn 6 aufdruckt, die ebenfalls aus dem unter 2. aufgeführten Grund eine Verbindung des beschriebenen Typs enthält,
4. auf die Rückseite der Folie 1 die Kontaktflächen 7, 7' aufdruckt, die wiederum aus dem unter 2. angegebenen Grund eine Verbindung des angegebenen Typs enthalten.
5. auf die Frontseite der Folie 1 eine zweite Keramikfolie, auf die zuvor eine interlaminare Binderschicht 8 auf YSZ-Basis aufgedruckt worden war, auflegt und
6. die beiden Folien zusammenlaminiert, ggf. die im Mehrfachnutzen hergestellten Fühlerelemente aus dem Laminat herausschneidet und diese sintert.

Diese weitere vorteilhafte Ausgestaltung unterscheidet sich von der zuvor beschriebenen zweiten Ausgestaltung somit im wesentlichen dadurch, daß auf Isolationsschichten zum Zwecke der Isolierung der Widerstandsbahn gegenüber den Keramikfolien verzichtet wird. Ermöglicht wird dies dadurch, daß zur Erzeugung der Widerstandsbahn eine Druckpaste aus Metallteilchen, z. B. Platin und einer Verbindung mit einem 5- oder höherwertigen Kation, z. B. Nb₂O₅ sowie ferner gegebenenfalls einer keramischen Komponente, z. B. Al₂O₃, verwendet wird.

Auch diese Verfahrensweise läßt sich modifizieren. So ist es beispielsweise möglich, das Durchkontaktieren zusammen mit dem Aufdrucken der Widerstandsbahn und dem Anbringen der Kontaktflächen 7, 7' durchzuführen.

Die Widerstandsbahn kann in allen Fällen in vorteilhafter Weise z. B. auch in Mäanderform ausgeführt sein. Die Sintertemperatur liegt zweckmäßig im Bereich von 1350 - 1650 °C, oder auch darunter, falls Widerstandsbahnen auf Ni-Basis oder Ni-Legierungsbasis verwendet werden, bei Sinterzeiten von 1 bis 10 Stunden.

### Beschreibung der Ausführungsbeispiele

### Beispiel 1

Zur Herstellung einer ersten erfindungsgemäßen Ausführungsform eines PTC-Temperaturfühlerelementes aus zwei Al₂O₃-Keramikfolien wurde wie in Fig. 1 schematisch dargestellt verfahren. Verwendet wurden zwei Folien einer Stärke von jeweils 0,3 mm. In die Basisfolie wurden zunächst Durchkontakierungslöcher gestanzt. Zur Erzeugung der Durchkontaktierungen wurde eine Pt/Al₂O₃-Paste durch die Löcher gesaugt. Auf die Frontseite der Folie wurden dann eine Widerstandsbahn aus Pt/Al₂O₃-Cermet aufgedruckt. Danach wurden auf die Rückseite der Folie im Bereich der Durchkontaktierungslöcher Kontaktflächen aus Pt/Al₂O₃-Cermet aufgedruckt. Anschließend wurde auf die Frontseite der Folie eine interlaminare Binderschicht auf Al₂O₃-Basis aufgedruckt. Auf die so bedruckte Folie wurde dann die zweite Al₂O₃-Keramikfolie aufgebracht, worauf die Folien zusammenlaminiert und gesintert wurden. Die Sintertemperatur lag bei 1600 °C. Die Sinterdauer betrug 3 Stunden.

Das erhaltene Temperaturfühlerelement konnte mit Erfolg in einem Gehäuse des aus der DE-OS 32 06 903 bekannten Typs eingesetzt und zur Temperaturmessung von Abgasen von Verbrennungsmotoren verwendet werden.

### Beispiel 2

Zur Herstellung eines weiteren erfindungsgemäßen PTC-Temperaturfühlerelementes wurde, wie in Fig. 2 schematisch dargestellt, wie folgt verfahren:

Verwendet wurden zwei Keramikfolien 1 und 2 auf YSZ-Basis mit einer Stärke von jeweils 0,3 mm. In einer ersten Verfahrensstufe wurden auf die Basisfolie 1 eine Al₂O₃-Isolationsschicht 3 und ein hermetisch abdichtender Rahmen aus einem interlaminaren Binder auf YSZ-Basis sowie auf die Folienrückseite (im Bereich der später aufzudruckenden Kontakte) ebenfalls eine Al₂O₃-Isolierschicht aufgedruckt, worauf Durchkontaktierungslöcher 5 und 5' ausgestanzt und mit einer Al₂O₃-Isolationsschicht sowie darüber mit einer elektrisch leitenden Pt/Al₂O₃-Cermetschicht versehen wurden.

In einer weiteren Verfahrensstufe wurde auf die Isolationsschicht 3 der Basisfolie 1 die PTC-Widerstandsbahn 6 aus Pt/Al₂O₃, gegebenenfalls in Mäanderform, aufgedruckt.

Auf die Rückseite der Basisfolie 1 wurden elektrische Kontaktflächen 7 und 7' aus Pt/Al₂O₃ gedruckt.

Gleichzeitig wurde auf die Keramikfolie 2 eine Al₂O₃-Isolationsschicht sowie ein hermetisch abdichtender Rahmen 4' auf YSZ-Basis aufgedruckt. Die Al₂O₃-Isolationsschicht konnte andererseits anstatt auf die Keramikfolie 2 auch auf die Folie 1 aufgedruckt werden.

Nach Bildung des Verbundkörpers durch Zusammenlaminieren wurde der Körper durch 4-stündiges Erhitzen auf eine Temperatur im Bereich von 1400 °C gesintert.

Der erhaltene PTC-Temperaturfühler wurde in ein Gehäuse des aus der DE-OS 32 06 903 bekannten Typs eingesetzt und zur Temperaturmessung von Abgasen von Verbrennungsmotoren verwendet.

### Beispiel 3

Zur Herstellung einer dritten Ausführungsform eines PTC-Temperaturfühlerelementes aus Keramikfolien auf Festelektrolytbasis für einen erfindungsgemäßen Temperaturfühler wurde, wie in Fig. 1 schematisch dargestellt, verfahren. Abweichend von den in Beispiel 1 beschriebenen Materialien wurden jedoch andere Materialien verwendet. Verwendet wurden diesmal zwei Keramikfolien 1 und 2 auf YSZ-Basis mit einer Stärke von jeweils 0,3 mm.

Zunächst wurden in die Keramikfolie 1 Durchkontaktierungslöcher 5 und 5' gestanzt. Zur Ausbildung der Durchkontaktierungen wurden in den ausgestanzten Löchern eine Platin-Cermetpaste der folgenden Zusammensetzung abgeschieden:
85 Gew.-Teile Pt-Pulver
12,5 Gew.-Teile Nb₂O₅-Pulver
2,5 Gew.-Teile Al₂O₃-Pulver.

Auf die Frontseite der Folie 1 wurde nunmehr in Siebdrucktechnik ausgehend von einer Pt-Paste, wie sie für die Erzeugung der Durchkontaktierungen verwendet wurde, die Widerstandsbahn 6 aufgedruckt und auf die Rückseite wurden mit der gleichen Paste die Kontaktflächen 7, 7' aufgetragen.

Danach wurde wie in Beispiel 2 beschrieben verfahren, mit der Ausnahme jedoch, daß auf die Folie 2 keine Al₂O₃-Isolationsschicht aufgedruckt wurde und anstelle des hermetisch abdichtenden YSZ-Dichtungsrahmens eine ganzflächige interlaminare Binderschicht auf YSZ-Basis aufgebracht wurde.

Das erhaltene PTC-Temperaturfühlerelement wurde in ein Gehäuse des aus der DE-OS 32 06 903 bekannten Typs eingesetzt und zur Temperaturmessung von Abgasen von Verbrennungsmotoren verwendet.

## Patentansprüche

1. PTC-Temperaturfühler, insbesondere zur Verwendung in der Abgasanlage von Verbrennungsmotoren, mit einem in einem Gehäuse angeordneten Fühlerelement mit einem PTC-Widerstand, dadurch gekennzeichnet, daß der PTC-Widerstand und die Leiterbahnen einheitlich aus einem Material bestehen und gemeinsam die Widerstandsbahn (6) bilden, und daß das Temperaturfühlerelement aus Keramikfolien (1, 2) gebildet wird, die zusammenlaminiert und zusammengesintert sind, um einen Laminatverbund zu bilden, in dem der PTC-Widerstand mit Leiterbahnen (6) hermetisch gegenüber dem Meßgas und der Umgebungsluft abgekapselt ist.

2. PTC-Temperaturfühler nach Anspruch 1,dadurch gekennzeichnet, daß die Keramikfolien (1, 2) des Temperaturfühlerelementes aus Folien auf Isolatorkeramik-Basis bestehen, und zwar einer Basisfolie (1) mit einem in Dickschichttechnik aufgedruckten PTC-Widerstand mit Leiterbahnen (6) sowie einer weiteren Folie (2), die mit der Basisfolie (1) zusammenlaminiert und zusammengesintert ist.

3. PTC-Temperaturfühler nach Anspruch 2, dadurch gekennzeichnet, daß die Keramikfolien (1, 2) des Temperaturfühlerelementes aus Folien auf Al₂O₃-Basis bestehen.

4. PTC-Temperaturfühler nach Anspruch 1, dadurch gekennzeichnet, daß der Laminatverbund des Temperaturfühlerelementes aus zwei Festelektrolyt-Keramikfolien (1, 2) gebildet wird, nämlich einer Basisfolie (1) mit einem in Dickschichttechnik aufgedruckten PTC-Widerstand mit Leiterbahnen (6) und einer weiteren Folie (2), die mit der Basisfolie (1) zusammenlaminiert und zusammengesintert ist.

5. PTC-Temperaturfühler nach Anspruch 4, dadurch gekennzeichnet, daß die Festelektrolyt-Keramikfolien (1) und (2) aus Folien von mit Yttrium stabilisiertem ZrO₂ (YSZ-Folien) bestehen und daß zwischen dem PTC-Widerstand mit Leiterbahnen (6) einerseits und den Festelektrolytfolien (1) und (2) andererseits isolierende Schichten (3, 3'') angeordnet sind.

6. PTC-Temperaturfühler nach einem der Ansprüche 1 bis 5, dadurch gekennzeichnet, daß die Keramikfolien des PTC-Temperaturfühlerelementes mittels eines interlaminaren Binders zusammenlaminiert sind.

7. Verfahren zur Herstellung eines PTC-Temperaturfühlerelements für einen PTC-Temperaturfühler nach den Ansprüchen 1 bis 3 und 6, dadurch gekennzeichnet, daß man in eine erste Keramikfolie (1) auf Isolatorkeramik-Basis, insbesondere auf Al₂O₃-Basis, Durchkontaktierungslöcher (5, 5') stanzt, Durchkontaktierungen erzeugt, im Bereich der Durchkontaktierungslöcher Kontaktflächen (7, 7') aufdruckt, die andere Seite der Folie mit einem PTC-Widerstand und Leiterbahnen aus demselben Material, die gemeinsam eine Widerstandsbahn (6) bilden, bedruckt und die bedruckte Folie mit einer zweiten Folie (2) auf Isolatorkeramik-Basis, insbesondere auf Al₂O₃-Basis zusammenlaminiert und sintert, derart, daß die PTC-Widerstandsbahn (6) hermetisch gegenüber dem Meßgas und der Umgebungsluft abgekapselt ist.

8. Verfahren zur Herstellung eines PTC-Temperaturfühlerelements für einen PTC-Temperaturfühler nach den Ansprüchen 1 sowie 4 bis 6, dadurch gekennzeichnet, daß man auf eine erste Festelektrolyt-Keramikfolie (1) beidseitig isolierende Schichten (3, 3') aufbringt, Durchkontaktierungslöcher (5, 5') stanzt, diese mit einer isolierenden Schicht versieht, Durchkontaktierungen erzeugt, auf die eine isolierende Schicht (3) einen PTC-Widerstand und Leiterbahnen aus demselben Material, die gemeinsam eine Widerstandsbahn (6) bilden, und auf die andere isolierende Schicht (3') im Bereich der Durchkontaktierungslöcher (5, 5') Kontaktflächen (7, 7') aufdruckt, auf die mit der PTC-Widerstandsbahn bedruckte Seite der Folie (1) eine zweite Festelektrolyt-Keramikfolie (2) mit einer zuvor aufgebrachten isolierenden Schicht (3'') sowie einem hermetisch abdichtenden Rahmen (4') aufbringt und die Folien zusammenlaminiert und sintert, derart, daß die PTC-Widerstandsbahn (6) hermetisch gegenüber dem Meßgas und der Umgebungsluft abgekapselt ist.

9. Verfahren zur Herstellung eines PTC-Temperaturfühlerelements für einen PTC-Temperaturfühler nach einem der Ansprüche 1, 4 oder 5, dadurch gekennzeichnet, daß man in eine erste Keramikfolie (1) auf Festelektrolyt-Basis, insbesondere auf YSZ-Basis, Durchkontaktierungslöcher (5, 5') stanzt, Durchkontaktierungen erzeugt, im Bereich der Durchkontaktierungslöcher Kontaktflächen (7, 7') aufdruckt, die andere Seite der Folie mit einem PTC-Widerstand und Leiterbahnen aus demselben Material, die gemeinsam die Widerstandsbahn (6) bilden, bedruckt und die bedruckte Folie mit einer zweiten Folie (2) auf Festelektrolyt-Basis zusammenlaminiert und sintert, wobei zur Erzeugung der Widerstandsbahn (6), der Durchkontaktierungen und der Kontaktflächen (7, 7') Pasten oder Suspensionen mit einem Zusatz aus einem Oxid, Mischoxid, Salz oder einer metallorganischen Verbindung eines fünf- oder höherwertigen Metalls verwendet werden, aus dem bei Sintertemperatur ein fünf- oder höherwertiges Kation unter Ausbildung isolierender Bereiche in die Festelektrolyt-Keramikfolie eindiffundiert.

10. Verfahren nach Anspruch 9, dadurch gekennzeichnet, daß man eine Paste oder Suspension mit einem Zusatz an Nb₂O₅ verwendet.

11. Verfahren nach einem der Ansprüche 7 bis 10, dadurch gekennzeichnet, daß man von Keramikfolien einer Stärke von 0,1 bis 0,6 mm ausgeht.

12. Verfahren nach einem der Ansprüche 7 bis 11, dadurch gekennzeichnet, daß man die Temperaturfühler maschinell fertigt, wobei eine große Stückzahl der Temperaturfühler dieselben Verfahrensschritte gleichzeitig durchläuft.

## Claims

1. PTC temperature sensor, in particular for use in the exhaust gas system of internal combustion engines, having a sensing element with a PTC resistor disposed in a housing, characterised in that the PTC resistor and the conductor tracks are uniformly composed of one material and jointly form the resistor track (6), and in that the temperature sensing element is formed from ceramic films (1, 2) which are laminated together and sintered together in order to form a laminate composite in which the PTC resistor with conductor tracks (6) is hermetically encapsulated with respect to the gas being measured and the ambient air.

2. PTC temperature sensor according to Claim 1, characterised in that the ceramic films (1, 2) of the temperature sensing element are composed of films based on an insulator ceramic, and in particular of a base film (1) with a PTC resistor having conductor tracks (6) printed on by thick-film technology, and also of a further film (2) which is laminated together with, and sintered together with, the base film (1),

3. PTC temperature sensor according to Claim 2, characterised in that the ceramic films (1, 2) of the temperature sensing element are composed of films based on Al₂O₃.

4. PTC temperature sensor according to Claim 1, characterised in that the laminated composite of the temperature sensing element is formed from two solid electrolyte ceramic films (1, 2), namely a base film (1) having a PTC resistor with conductor tracks (6) printed on by thick-film technology and a second film (2) which is laminated together with, and sintered together with, the base film (1).

5. PTC temperature sensor according to Claim 4, characterised in that the solid electrolyte ceramic films (1) and (2) are composed of films of ZrO₂ stabilized with yttrium (YSZ films) and in that insulating layers (3, 3'') are disposed between the PTC resistor with conductor tracks (6), on the one hand, and the solid electrolyte films (1) and (2), on the other hand.

6. PTC temperature sensor according to one of the Claims 1 to 5, characterised in that the ceramic films of the PTC temperature sensing element are laminated together by means of an interlaminar binder.

7. Process for producing a PTC temperature sensing element for a PTC temperature sensor according to Claims 1 to 3 and 6, characterised in that interconnection holes (5, 5') are punched in a first ceramic film (1) based on an insulator ceramic, in particular based on Al₂O₃, contact areas (7, 7') are printed on in the region of the interconnection holes, the other side of the film is printed with a PTC resistor and conductor tracks composed of the same material which together form a resistor track (6) and the printed film is laminated together and sintered with a second film (2) based on an insulator ceramic, in particular based on Al₂O₃, in a manner such that the PTC resistor track (6) is hermetically encapsulated with respect to the gas being measured and the ambient air.

8. Process for producing a PTC temperature sensing element for a PTC temperature sensor according to Claims 1 and 4 to 6, characterised in that insulating layers (3, 3') are deposited on both sides of a first solid electrolyte ceramic film (1), interconnection holes (5, 5') are punched, these are provided with an insulating layer, interconnections are produced, a PTC resistor and conductor tracks composed of the same material which together form a resistor track (6) are printed on the one insulating layer (3) and contact areas (7, 7') are printed on the other insulating layer (3') in the region of the interconnection holes (5, 5'), a second solid electrolyte ceramic film (2) having a previously deposited insulating layer (3'') and also a hermetically sealing frame (4') is deposited on the side of the film (1) printed with the PTC resistor track and the films are laminated together and sintered in a manner such that the PTC resistor track (6) is hermetically encapsulated with respect to the gas being measured and the ambient air.

9. Process for producing a PTC temperature sensing element for a PTC temperature sensor according to one of Claims 1, 4 or 5, characterised in that interconnection holes (5, 5') are punched in a first ceramic film (1) based on a solid electrolyte, in particular based on YSZ, interconnections are produced, contact areas (7, 7') are printed on in the region of the interconnection holes, the other side of the film is printed with a PTC resistor and conductor tracks from the same material, which together form the resistor track (6) and the printed film is laminated together and sintered with a second film (2) based on a solid electrolyte, while to produce the resistor track (6), the interconnections and the contact areas (7, 7'), use is made of pastes or suspensions containing an addition of an oxide, mixed oxide, salt or an organometallic compound of a pentavalent metal or one of higher valency from which a pentavalent cation or one of higher valency diffuses into the solid electrolyte ceramic film at sintering temperature to form insulating regions.

10. Process according to Claim 9, characterised in that a paste or suspension containing an addition of Nb₂O₅ is used.

11. Process according to one of Claims 7 to 10, characterised in that the starting point is ceramic films having a thickness of 0.1 to 0.6 mm.

12. Process according to one of Claims 7 to 11, characterised in that the temperature sensor is produced by machine, a large quantity of temperature sensors passing through the same process steps at the same time.

## Revendications

1. Capteur de température PTC, utilisable notamment dans les échappements de moteurs à combustion interne et comportant, à l'intérieur d'un boîtier, un élément thermosensible équipé d'une résistance PTC, capteur caractérisé en ce que cette résistance PTC et ses pistes conductrices sont constituées d'un même matériau et forment en même temps la résistante (6), et en ce que l'élément thermosensible est constitué de feuilles céramiques (1, 2) réunies par laminage et frittage de manière à former un ensemble laminé à l'intérieur duquel la résistance PTC avec ses pistes conductrices (6) est encapsulée de manière hermétique par rapport aux gaz à mesurer ainsi que par rapport à l'air environnant.

2. Capteur de température PTC selon la revendication 1, caractérisé en ce que les feuilles céramiques (1, 2) de l'élément thermosensible sont à base de céramique isolante, une feuille de base (1) portant la résistance PTC et ses pistes conductrices (6), réalisées par impression selon la technique des couches épaisses, l'autre feuille (2) étant réunie à la première (1) par laminage et frittage de l'ensemble.

3. Capteur de température PTC selon la revendication 2, caractérisé en ce que la feuille (1, 2) de l'élément thermosensible sont à base d'alumine.

4. Capteur de température PTC selon la revendication 1, caractérisé en ce que l'assemblage laminé constituant l'élément thermosensible est formé de deux feuilles céramiques (1, 2) d'un électrolyte solide, à savoir une feuille de base (1) portant une résistante PTC avec ses pistes conductrices (6) imprimées selon la technique des couches épaisses et une seconde feuille (2) assemblée à la première (1) par laminage et frittage.

5. Capteur de température PTC selon la revendication 4, caractérisé en ce que les feuilles céramiques (1, 2) en électrolyte solide sont faites de ZrO₂ stabilisé à l'yttrium (feuilles YSZ), des couches d'isolation (3, 3'') étant intercalées entre la résistance PTC avec ses pistes conductrices (6) d'une part, et d'autre part les feuilles (1, 2) d'électrolyte solide.

6. Capteur de température selon une des revendications 1 à 5, caractérisé en ce que les feuilles céramiques de l'élément thermosensible sont réunies par laminage, au moyen d'un liant interlaminaire.

7. Procédé de fabrication d'un élément thermosensible pour capteur de température PTC selon les revendications 1 à 3 et 6, caractérisé en ce qu'on découpe par estampage des trous de contacts traversants (5, 5') dans une première feuille céramique (1) à base de céramique isolante, notamment de l'alumine, on réalise les contacts traversants, on imprime les surfaces de contact (7, 7') dans la zone des trous de contact et sur l'autre face de la feuille une résistance PTC avec ses pistes conductrices faites du même matériau, l'ensemble formant un circuit résistant (6), on réunit par laminage et frittage d'ensemble la feuille imprimée et une seconde feuille (2) à base de céramique isolante, notamment de l'alumine, de sorte que les pistes résistantes PTC (6) est encapsulé hermétiquement par rapport aux gaz à mesurer et aussi par rapport à l'air environnant.

8. Procédé de fabrication d'un élément thermosensible PTC utilisable dans un capteur de température selon les revendications 1 et 4 à 6, caractérisé en ce qu'on dépose sur les deux faces d'une première feuille céramique (1) en électrolyte solide des couches isolantes (3, 3'), on découpe par estampage les trous de contacts traversants (5, 5'), on remplit ces trous d'une couche isolante, on réalise les contacts traversants, on imprime sur une couche isolante (3) une résistance PTC et ses pistes conductrices faites du même matériau de sorte que l'ensemble constitue une piste résistante (6) et sur l'autre couche isolante (3'), dans la zone des trous de contact résistants (5, 5') des surfaces de contact (7, 7'), on dépose sur la face imprimée de la feuille (1) une seconde feuille céramique (2) d'électrolyte solide même préalablement d'une couche isolante (3'') et d'un cadre (4') formant joint hermétique, on réunit les deux feuilles par laminage de l'ensemble suivi d'un frittage de sorte que le circuit résistant PTC (6) est encapsulé hermétiquement par rapport aux gaz dans lesquels s'effectuent les mesures et aussi par rapport à l'air environnant.

9. Procédé de fabrication d'un élément thermosensible PTC utilisable dans un capteur de température selon une des revendications 1, 4 ou 5, caractérisé en ce qu'on découpe par estampage les trous (5, 5') des contacts traversants, dans une première feuille céramique (1) à base d'électrolyte solide notamment à base de YSZ, on réalise les contacts traversants, on imprime les surfaces de contact (7, 7') dans la zone des trous de contact et sur l'autre face de la feuille une résistance PTC avec ses pistes conductrices faites du même matériau et dont l'ensemble constitue la piste résistante (6), on procède au laminage et au frittage de l'ensemble de la feuille imprimée et d'une seconde feuille (2) à base d'électrolyte solide, le circuit résistant (6), les contacts traversants et les surfaces de contact (7, 7') étant réalisés au moyen de pâtes ou suspensions additionnées d'un oxyde, d'un oxyde de zinc plombifère, d'un sel ou d'un composé organique d'un métal de valence 5 ou plus qui, à la température de frittage libère un cation de valence 5 ou plus qui diffuse à l'intérieur de l'électrolyte solide avec création de zones isolantes.

10. Procédé selon la revendication 9, caractérisé en ce qu'on utilise une pâte ou une suspension avec addition de Nb₂O₅.

11. Procédé selon une des revendications 7 à 10, caractérisé en ce qu'on utilise des feuilles céramiques d'une épaisseur comprise entre 0,1 et 0,6 mm.

12. Procédé selon une des revendications 7 à 11, caractérisé en ce que les éléments thermosensibles sont fabriqués mécaniquement ou un grand nombre de pièces suit en même temps les étapes du procédé lui-même.
